# EUROPÄISCHE PATENTSCHRIFT

(11) **EP 1 199 550 B1**
(45) Veröffentlichungstag und Bekanntmachung des Hinweises auf die Patenterteilung: **24.05.2006**
(21) Anmeldenummer: 01118646.7
(22) Anmeldetag: 03.08.2001
(51) Int. Cl.: G01L 3/10

(54) **Vorrichtung zum Messen von Drehmomenten in einer Antriebsanordnung**
Device for measuring torque in a driving device
Dispositif pour mesurer le couple de torsion dans un dispositif d'entraînement

(30) Priorität: 19.10.2000 DE 10052069
(43) Veröffentlichungstag der Anmeldung: 24.04.2002
(73) Patentinhaber: GKN Walterscheid GmbH, 53797 Lohmar (DE)
(72) Erfinder: Wilks, Eberhard, Dipl.-Ing., 56307 Daufenbach (DE); Lohmüller, Andreas, Dipl.-Ing., 53119 Bonn (DE)
(74) Vertreter: Harwardt, Günther

(56) Entgegenhaltungen:
- EP-A- 0 284 508
- DE-A- 3 627 739
- DE-A- 4 232 994
- GB-A- 1 465 734
- US-A- 5 228 349

## Beschreibung

Die Erfindung betrifft eine Vorrichtung zum Messen von Drehmomenten in einer Antriebsanordnung.

US 5 228 349 zeigt eine Vorrichtung zum Messen von Drehmomenten mit den Merkmalen des Oberbegriffs des Patentanspruchs 1.

EP 0 284 508 A2 offenbart eine Vorrichtung zum Messen von Drehmomenten, welche ein Torsionselement zum Übertragen von Drehmomenten aufweist. Das Torsionselement weist zwei Enden auf. An einem ersten Ende ist ein erstes Geberelement in Form eines magnetisierten Bandes vorgesehen. Am zweiten Ende ist ein zweites Geberelement ebenfalls in Form eines magnetisierten Bandes angebracht. Auf den magnetisierten Bändern ist jeweils ein periodisches Signal vorzugsweise in Form einer Sinuskurve aufgenommen. Bei Rotation des Torsionselements drehen sich die magnetisierten Bänder mit diesem um, so dass mit jeweils einem Sensorelement je magnetisiertem Band die Signale ausgelesen werden können. Bei einer Phasenverschiebung der beiden Signale beider magnetisierten Bänder kann somit auf die Torsion des Torsioriselements geschlossen werden und somit das Drehmoment ermittelt werden.

An dem ersten Ende des Torsionselements ist ein Rohr drehfest mit diesem verbunden, welches koaxial um das Torsionselement angeordnet ist und bis zum zweiten Ende desselben reicht. Am zweiten Ende weist das Rohr diametral gegenüberliegend Ausnehmungen auf, in die ein Stift hineinragt, welcher in einer Radialbohrung des Torsionselements sitzt und diametral gegenüberliegend aus der Bohrung vorragt. In Umfangsrichtung betrachtet sind die Ausnehmungen als Schlitz gestaltet, denen sich der Stift bei Torsion des Torsionselements frei bewegen kann, bis der Stift an die Enden der Schlitze in Anlage gelangt. Sobald der Stift in Anlage zu den Enden der Schlitze gelangt, wird das Drehmoment zum einen über das Torsionselement und zum anderen über das Rohr übertragen, so dass eine Drehmomentüberlast des Torsionselements vermieden wird.

Bevorzugt wird zur Drehmomentmessung an einem drehenden Bauelement, beispielsweise einer Antriebswelle in einem Getriebe, die mit Drehmoment beaufschlagt ist, diese mit Dehnmessstreifen bestückt. Die davon erzeugten elektrischen Signale werden über Schleifringübertrager nach außen übertragen. In solchen Einrichtungen können hochpräzise Drehmomentsignale erzeugt werden, wie sie beispielsweise bei Labormesseinrichtungen erforderlich sind. Die Signalübertragung kann auch kontaktlos mittels Sender und Empfänger erfolgen. Die Bestückung mit Messbrücken aus Dehnmessstreifen, deren Eichung und die Verkabelung bedeuten hohe Kosten. Ein wesentlicher Kostenfaktor ist die Signalübertragung von der rotierenden Welle auf die stehenden Bauteile. Sie birgt durch den hohen Integrationsgrad von Elektronikbauteilen in Getrieben darüber hinaus eine hohe Fehlerquote in sich. Für viele Einrichtungen und Maschinen ist die hohe Genauigkeit dieser Art von Messeinrichtungen nicht gefordert. Die vorgenannten Einrichtungen lassen sich jedoch nicht so entfeinern, dass Kostengrößen erreicht werden, die angemessen sind. Aus diesem Grunde kommen bei Antriebssystemen für Landmaschinen trotz des hohen Nutzens, den eine Drehmomentmessung für den Arbeitsprozess bringt, solche Einrichtungen praktisch nicht zum Einsatz. Ein Beispiel für die Integration einer solchen Einrichtung in ein Getriebe ist der DE 42 31 412 C1 zu entnehmen.

Der Erfindung liegt daher die Aufgabe zugrunde, eine Vorrichtung zum Messen von Drehmomenten in einer Antriebsanordnung vorzuschlagen, welche kostengünstig und einfach aufgebaut ist sowie keiner Übertragung elektrischer Signale vom drehenden Bauteil auf einen feststehenden Empfänger bedarf.

Diese Aufgabe wird erfindungsgemäß durch eine Vorrichtung zum Messen von Drehmomenten in einer Antriebsanordnung, umfassend
- ein Torsionselementin Form einer Torsionswelle, das vom Drehmoment beaufschlagbar ist, zur Übertragung von Drehmomenten drehend antreibbar ist und ein erstes Wellenende und ein zweites Wellenende aufweist,
- ein für den zu messenden Drehmomentbereich drehmomentfreies und mit dem Torsionselement rotierendes Referenzelementin Form eines Rohres, welches ein erstes Rohrende und ein zweites Rohrende aufweist,
- ein erstes Geberelement, das an dem Torsionselement angebracht ist und auf einem Rotationskreis bewegt wird, wenn das Torsionselement rotiert,
- ein zweites Geberelement, das an dem Referenzelement angebracht ist und auf dem Rotationskreis umfangsversetzt zum ersten Geberelement bewegbar ist,
- ein Sensorelement, das relativ zum Torsionselement und zum Referenzelement ortsfest angeordnet ist und das dem Rotationskreis der beiden Geberelemente gegenüberliegend angeordnet ist und dazu bestimmt ist, das Passieren der Geberelemente oder einer Referenzkante oder Referenzfläche derselben zu erfassen und jeweils ein entsprechendes Signal zu erzeugen und
- eine Auswerteeinheit, welcher die Signale zuführbar sind und die dazu bestimmt ist, aus dem Versatz der Signale das anliegende Drehmoment zu ermitteln, wobei
das Referenzelementdazu bestimmt ist, ab Erreichen eines vorbestimmten Drehmomentes an der Drehmomentübertragungteilzunehmen,
das Referenzelement koaxial um das Torsionselement (9) angeordnet ist und das erste Rohrende mit dem ersten Wellenende fest verbunden ist,
am Außenumfang des zweiten Rohrendes das zweite Geberelementangeordnet ist und das zweite Rohrende eine Aussparung für den Durchtritt des am Torsionselement angebrachten ersten Geberelementes aufweist und beide Geberelemente in einer Ebene auf ihrem gemeinsamen Rotationskreis umfangsversetzt angeordnet sind,
am zweiten Rohrende des Referenzelementes eine erste Aussparung und diametral dazu eine zweite Aussparung vorgesehen ist, die jeweils in Umfangsrichtung durch beabstandete ebene Anschlagflächen begrenzt sind, und
das erste Geberelement zapfenförmig gestaltet ist und quer zur Drehachse am Torsionselement angebracht ist und mit einem ersten Ansatz radial bis In die erste Aussparung hineinragt und mit einem zweiten Ansatz radial aus der zweiten Aussparung vorsteht, wobei ausschließlich dessen vorstehender Abschnitt als Geberabschnitt dient,
gelöst.

Von Vorteil bei dieser Ausbildung ist, dass die Relativstellung der beiden Geberelemente zueinander, d.h. die Größe des Versatzes der beiden zueinander auf dem Rotationskreis eine Information über die Höhe des anliegenden Drehmomentes enthält. Diese kann aus Signalen hergeleitet werden, die die beiden Geberelemente beim Vorbeilaufen an dem ortsfest angebrachten Sensor bewirken. Die zeitliche Abfolge der Signale, d.h. deren zeitliche Verschiebung zueinander ist proportional dem anliegenden Drehmoment. Diese Signale können in einer Auswerteeinheit entsprechend in Drehmomentmesswerte umgesetzt werden und genutzt werden, um entweder ein Warnsignal oder eine Anzeige zu erzeugen oder aber benutzt werden, um den Antrieb zu steuern. So kann bei bestimmten Zuständen beispielsweise ein Stillsetzen eines anzutreibenden Aggregates erfolgen. Es kann aber auch abhängig vom festgestellten Drehmomentwert eine Funktion der Einrichtung gesteuert werden, beispielsweise ein schnelleres oder langsameres Rotieren des mit der Drehmomentmessvorrichtung versehenen Antriebsstranges. Aber auch andere Funktionen können beeinflusst werden. Beispiele für eine Anwendung einer solchen Drehmomentmessvorrichtung sind Kunstdüngerstreuer oder auch Dungstreuer. So kann beispielsweise ein auf einen Minimalwert abgefallenes Drehmoment bei einem Kunstdüngerstreuer ein Anzeichen dafür sein, dass der Vorratsbehälter leer ist oder aber die Verteileinrichtung nicht mehr ausreichend mit Kunstdünger versorgt wird. Ein zu hohes, einen Maximalwert erreichendes Drehmoment kann dabei ein Hinweis darauf sein, dass Verstopfungen gegeben sind. Die Drehmomentteilnahme des Referenzelementes ab einem bestimmten Drehmoment ist insbesondere beim Einsatz in landwirtschaftlichen Geräten vorteilhaft, um beispielsweise ein Gerät beim Auftreten von Verstopfungen frei zu fahren. Die Belastung liegt dann höher als im normalen Arbeitsbereich. Die Drehmomentmessvorrichtung braucht daher nur so ausgelegt zu werden, dass Messungen nur in den tatsächlichen Arbeitsbereichen erfolgen.

Bei einem Dungstreuer kann die Drehmomentmessvorrichtung beispielsweise in den Antriebsstrang für die der Ausbringung auf das Feld dienenden Arbeitswerkzeuge eingeschaltet sein, wobei abhängig von der Größe des gemessenen Drehmomentes der Kratzboden gesteuert wird, um mehr oder weniger Dung den Ausbringungsorganen zuzuführen, um somit eine gleichmäßige Ausbringung zu erzielen.

Um die Belastung niedrig zu halten, sind die beiden Ansätze mit Abflachungen versehen, die zur Anlage an den Anschlagflächen des Referenzelementes bestimmt sind.

Vorzugsweise ist das zweite Geberelement durch ein Zapfenelement dargestellt, das auf der Außenfläche des Referenzelementes zu der zweiten Aussparung, aus der der zweite Ansatz austritt, umfangsversetzt angeordnet ist.

Vorzugsweise ist das als zweites Geberelement dienende Zapfenelement formmäßig dem als ersten Geberelement dienenden zweite Ansatz entsprechend ausgebildet.

Das Sensorelement ist einem ortsfesten Gehäuse zugeordnet, welches das Torsionselement und das Referenzelement im Bereich der beiden Geberelemente umschließt. Die Auswerteeinheit kann beispielsweise dem vom Fahren einsehbaren oder in dessen Wahrnehmungsbereich liegenden Bereich eines Traktors zugeordnet werden. Alternativ ist es möglich, dass die Auswerteeinheit nahe zum Sensor angeordnet ist und eine Signalübertragung zu einer Anzeige- oder Signaleinheit erfolgt, die im Sichtbereich bzw. Hörbereich des Traktorfahrers angebracht ist.

Ein bevorzugtes Ausführungsbeispiel der Erfindung ist anhand einer Antriebsanordnung für ein landwirtschaftliches Gerät näher erläutert.

Es zeigt
- Figur 1: einen Längsschnitt für einen Abschnitt einer Antriebsanordnung, der eine Drehmomentmessvorrichtung nach der Erfindung umfasst,
- Figur 2: einen Schnitt II-II gemäß Figur 1 und
- Figur 3: einen Schnitt III-III gemäß Figur 1 sowie die Zuordnung einer Auswerteeinheit.

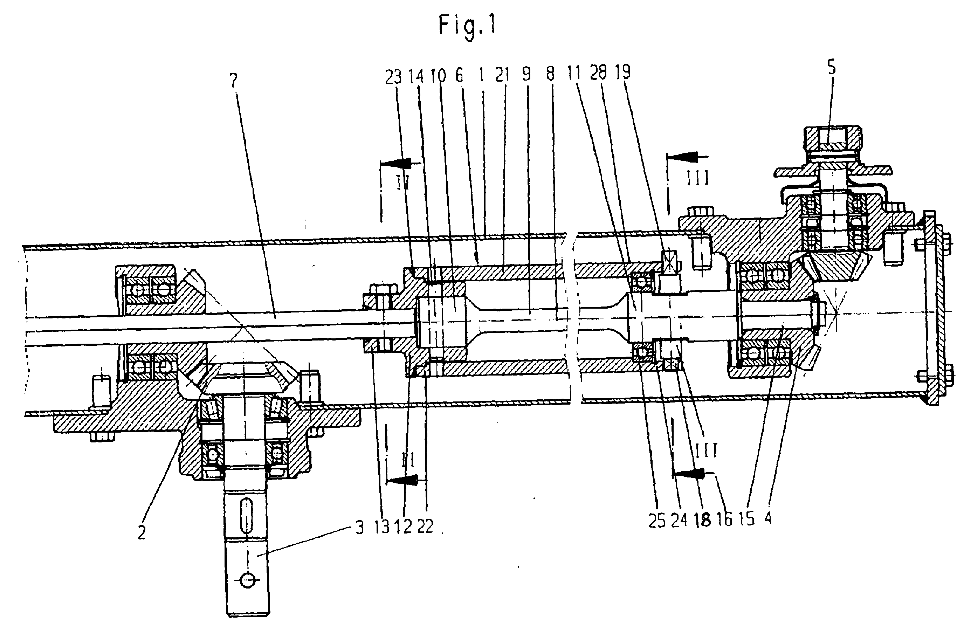

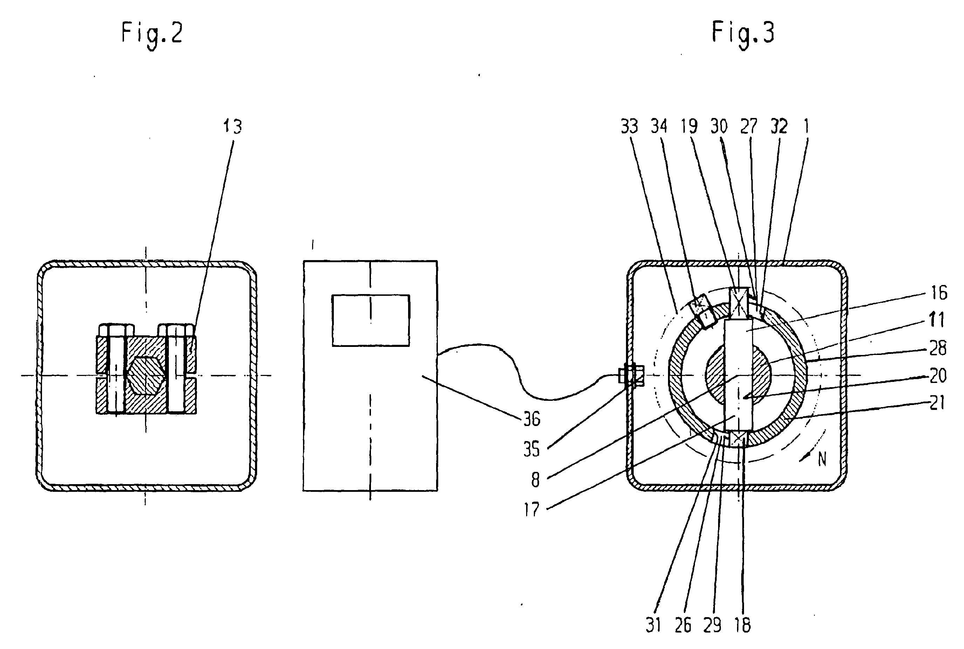

Nachfolgend werden die Figuren 1 bis 3 zusammen beschrieben.

Es ist ein Abschnitt einer Antriebsanordnung für ein landwirtschaftliches Gerät dargestellt, wobei einem Gehäuse 1 oder Tragrahmen, der kastenförmig gestaltet ist, ein erstes Kegelradwinkelgetriebe 2 zugeordnet ist, dessen nach außen ragender Antriebszapfen 3 zur Einleitung eines Drehmomentes dient. Das erste Kegelradwinkelgetriebe 2 ist mit einem zweiten Kegelradwinkelgetriebe 4, das dazu beabstandet dem Gehäuse 1 zugeordnet ist und einen Abtriebszapfen 5 aufweist, über die Drehmomentmessvorrichtung 6 und eine Antriebswelle 7, welche zusammen um die Drehachse 8 drehbar sind, drehmäßig verbunden. Ein über den Antriebszapfen 3 eingeleitetes Drehmoment wird über diese Anordnung an den Abtriebszapfen 5 weitergeleitet. Die Antriebswelle 7 dient auch zum drehmomentmäßigen Anschluß eines oder mehrerer weiterer Kegelradwinkelgetriebe mit entsprechenden Abtriebszapfen. Dabei können in den Antriebsstrang zu den weiteren anzutreibenden Abschnitten eine oder mehrere entsprechend der nachfolgend beschriebenen Drehmomentmessvorrichtung 6 aufgebaute Drehmomentmessvorrichtungen eingeschaltet sein.

Die Drehmomentmessvorrichtung 6 umfasst das Torsionselement 9 in Form einer Welle mit einem Querschnitt, der für den im normalen Arbeitsbereich erforderlichen Drehmomentbereich ausgelegt ist. Das Torsionselement 9 weist ferner ein erstes Wellenende 10 und ein zweites Wellenende 11 auf. Diese sind gegenüber dem dazwischen-befindlichen und sich bei Drehmomentbelastung verdrehenden Bereich verdickt ausgebildet. Das erste Wellenende 10 ist über einen Zylinderstift 14 mit dem Anschlusselement 12 verbunden. Dieses weist einen Klemmabschnitt 13 auf, der zur Verbindung mit der Antriebswelle 7 dient. Somit ist das erste Wellenende 10 drehmäßig mit der Antriebswelle 7 verbunden, so dass bei deren Antrieb es mit dieser drehen muß. Das zweite Wellenende 11 ist mit einem Verbindungszapfen 15 versehen, der zur drehfesten Verbindung mit einem Kegelrad des zweiten Kegelradwinkelgetriebes 4 dient. Des weiteren besitzt das zweite Wellenende 11 eine Querbohrung 20, deren Achse die Drehachse 8 rechtwinklig schneidet. In die Querbohrung 20 ist ein erstes Geberelement 16, das Zapfenform aufweist, mit seinem zylindrischen Verbindungsabschnitt 17 fest eingesetzt. Das erste Geberelement 16 weist einen ersten Ansatz 18 und diametral dazu an dem anderen Ende einen zweiten Ansatz 19 auf.

Um das Torsionselement 9 herum ist ein rohrförmiges Referenzelement 21 angeordnet, dessen erstes Rohrende 22 über eine Schweißnaht 23 fest mit dem Anschlusselement 12 verbunden ist. Es ist damit auch fest mit dem ersten Wellenende 10 des Torsionselements 9 verbunden, so dass es dessen Drehbewegung mitmacht. Das rohrförmige Referenzelement 21 ist im Bereich seines zweiten Rohrendes 24 mittels eines Wälzlagers 25 auf dem zweiten Wellenende 11 gelagert. Das zweite Rohrende 24 folgt damit dem ersten Rohrende 22, d.h. unterliegt keiner Verformung im Meßbereich, während ein Referenzpunkt am zweiten Wellenende 11 abhängig von dem am Torsionselement 9 anliegenden Drehmoment einem im drehmomentfreien Zustand am ersten Wellenende 10 entsprechend angeordneten Referenzpunkt je nach Drehrichtung vor- oder nacheilt. An dem zweiten Rohrende 24 sind zwei diametral angeordnete Aussparungen, nämlich die erste Aussparung 26 und die zweite Aussparung 27 angebracht. Diese erstrecken sich in Umfangsrichtung des Rohres über einen begrenzten Bereich, wobei die beiden Aussparungen 26, 27 gleich ausgebildet sind. Der erste Ansatz 18 reicht bis in die erste Aussparung 26 hinein, schließt aber nach außen mit der Außenfläche 28 des rohrförmigen Referenzelementes 21 ab. Der zweite Ansatz 19 durchragt die zweite Aussparung 27 und steht um ein bestimmtes Maß über die Außenfläche 28 des rohrförmigen Referenzelementes 21 vor. Die Umfangserstreckung der beiden Aussparungen 26, 27 ist um ein bestimmtes Maß größer als die der beiden Ansätze 18, 19. Dies bedeutet, dass bei Drehmomentbelastung des Torsionselementes 9 sich die beiden Ansätze 18, 19 im Rahmen ihres Freiheitsgrades in den Aussparungen 26, 27 frei bewegen können, bis die beiden Ansätze 18, 19 mit ihren Abflachungen 29, 30 an den entsprechenden Anschlagflächen 31, 32 zur Anlage kommen und ein vorbestimmtes maximales Drehmoment erreicht wird. Danach nimmt auch das Referenzelement 21 an der Drehmomentweiterleitung vom ersten Kegelradwinkelgetriebe 2 an das zweite Kegelradwinkelgetriebe 4 teil. Da der als Geberabschnitt dienende Abschnitt des zweiten Ansatzes 19 über die Außenfläche 28 des rohrförmigen Referenzelementes 21 vorsteht übernimmt er praktisch die Funktion eines Geberelementes. Dieser ist bei Rotation auf einem Rotationskreis 33 zentriert. Von der Außenfläche 28 des rohrförmigen Referenzelementes 21 steht umfangsversetzt zu der zweiten Aussparung 27 ein zweites Geberelement 34 vor, das formmäßig dem zweiten Ansatz 19 bzw. dem als Geberabschnitt dienenden Abschnitt des zweiten Ansatzes 19 angepasst ist. Er ist auf dem gleichen Rotationskreis wie dieser angeordnet. Bei Drehmomentbelastung in Drehrichtung N eilt der zweite Ansatz 19 des Geberelementes 16 dem zweiten Geberelement 34 vor, und das Maß der Voreilung wird durch einen Sensor 35, der dem Rotationskreis 33 und damit den beiden Geberelementen 16, 34 gegenüberstehend angeordnet ist, erfasst. Das Sensorelement 35 ist mit einer Auswerteeinheit 36 verbunden, die dazu dient, aus der Abfolge, d.h. dem zeitlichen Versatz des Vorbeistreichens des in Drehrichtung N voreilenden ersten Geberelementes 16 zu dem nacheilenden zweiten Geberelement 34 das anstehende Drehmoment zu errechnen. Dieses ist proportional dem Abstand der beiden Geberelemente 16, 34 bzw. des zweiten Ansatzes 19 des ersten Geberelementes 16 zum zweiten Geberelement 34.

Die Auswerteeinheit 36 kann ein akustisches Signal erzeugen oder auch Schaltfolgen auslösen, beispielsweise das Stillsetzen des Antriebes. Sie kann aber auch dazu genutzt werden, das jeweils anstehende Drehmoment anzuzeigen oder akustisch zu warnen. Der Einsatz der erfindungsgemäßen Vorrichtung ist nicht auf die oben beschriebene Getriebeanordnung begrenzt. Neben dem Einsatz in Antrieben für landwirtschaftliche Geräte und Maschinen kommt generell eine Verwendung in einem Antriebsstrang, auch beispielsweise dem eines Fahrrades, in Frage.

### Bezugszeichenliste

- 1: Gehäuse
- 2: erstes Kegelradwinkelgetriebe
- 3: Antriebszapfen
- 4: zweites Kegelradwinkelgetriebe
- 5: Abtriebszapfen
- 6: Drehmomentmeßvorrichtung
- 7: Antriebswelle
- 8: Drehachse
- 9: Torsionselement
- 10: erstes Wellenende
- 11: zweites Wellenende
- 12: Anschlusselement
- 13: Klemmabschnitt
- 14: Zylinderstift
- 15: Verbindungszapfen
- 16: erstes Geberelement
- 17: Verbindungsabschnitt
- 18: erster Ansatz
- 19: zweiter Ansatz
- 20: Querbohrung
- 21: rohrförmiges Referenzelement
- 22: erstes Rohrende
- 23: Schweißnaht
- 24: zweites Rohrende
- 25: Wälzlager
- 26: erste Aussparung
- 27: zweite Aussparung
- 28: Außenfläche
- 29: Abflachung
- 30: Abflachung
- 31: Anschlagfläche
- 32: Anschlagfläche
- 33: Rotationskreis
- 34: zweites Geberelement
- 35: Sensorelement
- 36: Auswerteeinheit

- N: Drehrichtung

## Patentansprüche

1. Vorrichtung zum Messen von Drehmomenten in einer Antriebsanordnung, umfassend
- ein Torsionselement (9) in Form einer Torsionswelle, das vom Drehmoment beaufschlagbar ist, zur Übertragung von Drehmomenten drehend antreibbar ist und ein erstes Wellenende (10) und ein zweites Wellenende (11) aufweist,
- ein für den zu messenden Drehmomentbereich drehmomentfreies und mit dem Torsionselement (9) rotierendes Referenzelement (21) in Form eines Rohres, welches ein erstes Rohrende (22) und ein zweites Rohrende (24) aufweist,
- ein erstes Geberelement (16), das an dem Torsionselement (9) angebracht ist und auf einem Rotationskreis (33) bewegt wird, wenn das Torsionselement (9) rotiert,
- ein zweites Geberelement (34), das an dem Referenzelement (21) angebracht ist und auf dem Rotationskreis (33) umfangsversetzt zum ersten Geberelement (16) bewegbar ist,
- ein Sensorelement (35), das relativ zum Torsionselement (9) und zum Referenzelement (21) ortsfest angeordnet ist und das dem Rotationskreis (33) der beiden Geberelemente (16, 34) gegenüberliegend angeordnet ist und dazu gestaltet ist, das Passieren der Geberelemente (16, 34) oder einer Referenzkante oder Referenzfläche derselben zu erfassen und jeweils ein entsprechendes Signal zu erzeugen und
- eine Auswerteeinheit (36), welcher die Signale zuführbar sind und die dazu gestaltet ist, aus dem Versatz der Signale das anliegende Drehmoment zu ermitteln,
**dadurch gekennzeichnet,**
**dass** das Referenzelement (21) dazu gestaltet ist, ab Erreichen eines vorbestimmten Drehmomentes an der Drehmomentübertragung teilzunehmen,
**dass** das Referenzelement (21) koaxial um das Torsionselement (9) angeordnet ist und das erste Rohrende (22) mit dem ersten Wellenende (10) fest verbunden ist,
**dass** am Außenumfang des zweiten Rohrendes (24) das zweite Geberelement (34) angeordnet ist und das zweite Rohrende (24) eine Aussparung (27) für den Durchtritt des am Torsionselement (9) angebrachten ersten Geberelementes (16) aufweist und beide Geberelemente (16, 34) in einer Ebene auf ihrem gemeinsamen Rotationskreis (33) umfangsversetzt angeordnet sind,
**dass** am zweiten Rohrende (24) des Referenzelementes (21) eine erste Aussparung (26) und diametral dazu eine zweite Aussparung (27) vorgesehen ist,
die jeweils in Umfangsrichtung durch beabstandete ebene Anschlagflächen begrenzt sind, und
**dass** das erste Geberelement (16) zapfenförmig gestaltet ist und quer zur Drehachse (8) am Torsionselement (9) angebracht ist und mit einem ersten Ansatz (18) radial bis in die erste Aussparung (26) hineinragt und mit einem zweiten Ansatz (19) radial aus der zweiten Aussparung (27) vorsteht, wobei ausschließlich dessen vorstehender Abschnitt als Geberabschnitt dient.

2. Vorrichtung nach Anspruch 1,
**dadurch gekennzeichnet,**
**dass** die beiden Ansätze (18, 19) Abflachungen (29, 30) aufweisen, die zur Anlage an den Anschlagflächen (31, 32) bestimmt sind.

3. Vorrichtung nach Anspruch 1,
**dadurch gekennzeichnet,**
**dass** das zweite Geberelement (34) durch ein Zapfenelement dargestellt ist, das auf der Außenfläche (28) des Referenzelementes (21) zu der zweiten Aussparung (27), aus der der zweite Ansatz (19) austritt, umfangsversetzt angeordnet ist.

4. Vorrichtung nach Anspruch 3,
**dadurch gekennzeichnet,**
**dass** das als zweites Geberelement (34) dienende Zapfenelement formmäßig dem als erstem Geberelement (16) dienenden zweiten Ansatz (19) entspricht.

5. Vorrichtung nach einem der Ansprüche 1 bis 4,
**dadurch gekennzeichnet,**
**dass** der Sensor (35) einem Gehäuse (1) zugeordnet ist, das das Torsionselement (9) und das Referenzelement (21) im Bereich der beiden Geberelemente (16, 34) umschließt.

## Claims

1. A device for measuring torque in a drive assembly, comprising
a torsion element (9) in the form of a torsion shaft which can be loaded by torque, which, for the purpose of transmitting torque, is rotatingly drivable and which comprises a first shaft end (10) and a second shaft end (11);
a reference element (21) in the form of a tube which is torque-free for the torque range to be measured and which comprises a first tube end (22) and a second tube end (24);
a first transmitter element (16) which is attached to the torsion element (9) and is moved on the rotational circle (33) when the torsion element (9) rotates;
a second transmitter element (34) which is attached to the reference element (21) and which, while being circumferentially offset relative to the first transmitter element (16), is movable on the rotational circle (33);
a sensor element (35) whose location is stationary relative to the torsion element (9) and relative to the reference element (21), which is arranged opposite the rotational circle (33) of the two transmitter elements (16, 34) and which is designed in such a way that it records the passage of the transmitter elements (16, 34) or of a reference edge or reference face of same and that it generates a corresponding signal; and
an evaluation unit (36) which can be supplied with the signals and which is designed for determining the applied torque from the offset of the signals,
**characterised in**
**that** the reference element (21) is designed in such a way that, when a predetermined torque has been reached, it participates in the transmission of torque,
**that** the reference element (21) is arranged coaxially around the torsion element (9), and that the first tube end (2) is firmly connected to the first shaft end (10);
**that** the second transmitter element (34) is arranged at the outer circumference of the second tube end (24), that the second tube end (24) comprises a recess (27) to allow the passage of the first transmitter element (16) attached to the torsion element (9) and that both transmitter elements (16, 34) are arranged so as to be circumferentially offset in a plane on their common rotational circle (33);
**that**, at the second tube end (24) of the reference element (21), there is provided a first recess (26) and, diametrically opposite thereto, a second recess (27) which, in the circumferential direction, each are delimited by spaced planar abutment faces; and
**that** the first transmitter element (16) is journal-shaped and is arranged transversely to the axis of rotation (8) at the torsion element (9) and, by means of a first projection (18), projects radially into the first recess (26) and, by means of a second projection (19), projects radially out of the second recess (27), wherein only the projecting portion of same acts as a transmitter portion.

2. A device according to claim 1,
**characterised in**
**that** the two projections (18, 19) comprise flattened portions (29, 30) which are provided for resting against the abutment faces (31, 32).

3. A device according to claim 1,
**characterised in**
**that** the second transmitter element (34) is provided in the form of a journal element which is arranged on the outer face (28) of the reference element (21) so as to be circumferentially offset relative to the second recess (27) from which the second projection (19) projects.

4. A device according to claim 3,
**characterised in**
**that**, in respect of shape, the journal element serving as the second transmitter element (34) corresponds to the second projection (19) serving as the first transmitter element (16).

5. A device according to any one of claims 1 to 4,
**characterised in**
**that** the sensor (35) is associated with a housing (1) which encloses the torsion element (9) and the reference element (21) in the region of the two transmitter elements (16, 34).

## Revendications

1. Dispositif de mesure de couples de rotation dans un dispositif de transmission, comportant
- un élément de torsion (9) en forme d'arbre de torsion, qui peut être sollicité par le couple de rotation, qui peut être entraîné en rotation pour la transmission des couples de rotation et qui comporte une première extrémité d'arbre (10) et une deuxième extrémité d'arbre (11),
- un élément de référence (21) en forme de tube, sans couple de rotation pour le domaine de couples à mesurer, qui tourne avec l'élément de torsion (9) et qui comporte une première extrémité de tube (22) et une deuxième extrémité de tube (24),
- un premier élément émetteur (16) qui est monté sur l'élément de torsion (9) et qui se déplace sur un cercle de rotation (33) lorsque l'élément de torsion (9) est entraîné en rotation,
- un deuxième élément émetteur (34), qui est monté sur l'élément de référence (21) et qui peut se déplacer sur le cercle de rotation (33) en étant décalé sur la circonférence par rapport au premier élément émetteur (16),
- un élément capteur (35) qui est localement fixe par rapport à l'élément de torsion (9) et à l'élément de référence (21), qui est disposé en face du cercle de rotation (33) des deux éléments émetteurs (16, 34) et qui est conçu pour détecter le passage des éléments émetteurs (16, 34) ou d'un bord de référence ou d'une surface de référence de ceux-ci et générer dans chaque cas un signal correspondant, et
- une unité d'analyse (36), vers laquelle sont acheminés les signaux et qui est conçue pour déterminer à partir du décalage des signaux le couple de rotation appliqué,
**caractérisé**
- **en ce que** l'élément de référence (21) est conçu pour participer à la transmission du couple de rotation lorsqu'un couple de rotation déterminé est atteint,
- **en ce que** l'élément de référence (21) est agencé coaxialement autour de l'élément de torsion (9) et la première extrémité de tube (22) est reliée solidaire à la première extrémité d'arbre (10)
- **en ce que** le deuxième élément émetteur (34) est agencé sur le pourtour extérieur de la deuxième extrémité de tube (24) et la deuxième extrémité de tube (24) comporte un évidement (27) pour le passage du premier élément émetteur (16) agencé sur l'élément de torsion (9), et les deux éléments émetteurs (16, 34) sont agencés dans un plan sur leur cercle de rotation (33) commun en étant décalés sur la circonférence,
- **en ce que**, sur la deuxième extrémité de tube (24) de l'élément de référence (21), il est prévu un premier évidement (26) et un deuxième évidement (27) diamétralement opposé à ce dernier, lesquels sont délimités dans le sens périphérique par des surfaces de butée planes à distance l'une de l'autre, et
- **en ce que** le premier élément émetteur (16) est conçu en forme de tenon et est agencé perpendiculairement à l'axe de rotation (8) sur l'élément de torsion (9) et s'engage avec une première saillie (18) radialement jusque dans le premier évidement (26) et s'avance avec une deuxième saillie (19) radialement hors du deuxième évidement (27), seule cette partie en saillie faisant fonction de partie émettrice.

2. Dispositif selon la revendication 1, **caractérisé en ce que** les deux saillies (18, 19) comportent des méplats (29, 30) qui sont destinées à venir en appui contre les surfaces de butée (31, 32).

3. Dispositif selon la revendication 1, **caractérisé en ce que** le deuxième élément émetteur (34) est formé par un tenon qui est agencé sur la face extérieure (28) de l'élément de référence (21) en étant décalé sur la périphérie par rapport au deuxième évidement (27) hors duquel s'avance la deuxième saillie (19).

4. Dispositif selon la revendication 3, **caractérisé en ce que** le tenon formant le deuxième élément émetteur (34) correspond par sa forme à la deuxième saillie (19) faisant fonction de premier élément émetteur (16).

5. Dispositif selon l'une quelconque des revendications 1 à 4, **caractérisé en ce qu'**un boîtier (1) est associé au capteur (35), lequel boîtier entoure l'élément de torsion (9) et l'élément de référence (21) dans la zone des deux éléments émetteurs (16, 34).
